# EUROPEAN PATENT SPECIFICATION

(11) **EP 1 067 525 B1**
(45) Date of publication and mention of the grant of the patent: **28.07.2004**
(21) Application number: 00305341.0
(22) Date of filing: 23.06.2000
(51) Int. Cl.: G11B 7/09, G11B 7/095

(54) **Method and apparatus for tracking error detection in optical disk driver**
Verfahren und Vorrichtung zur Spurfolgefehlerdetektion in einem optischen Plattenlaufwerk
Procédé et dispositif de détection d'erreur de suivi de piste dans une unité de disque optique

(30) Priority: 08.07.1999 KR 9927451
(43) Date of publication of application: 10.01.2001
(73) Proprietor: SAMSUNG ELECTRONICS CO., LTD., Suwon-City, Kyungki-do (KR)
(72) Inventor: Ma, Byung-in, Suwon-city, Kyungki-do (KR); Park, In-sik, Kwonseon-gu, Suwon-City, Kyungki-do (KR); Seo, Jung-eon, Uiwang-city Kyungki-do (KR); Shim, Jae-seong, Kwangjin-gu, Seoul (KR)
(74) Representative: Chugg, David John

(56) References cited:
- US-A- 5 808 979
- US-A- 5 914 925
- PATENT ABSTRACTS OF JAPAN vol. 1999, no. 02, 26 February 1999 (1999-02-26) -& JP 10 302277 A (MATSUSHITA ELECTRIC IND CO LTD), 13 November 1998 (1998-11-13)
- PATENT ABSTRACTS OF JAPAN vol. 1996, no. 03, 29 March 1996 (1996-03-29) -& JP 07 296395 A (VICTOR CO OF JAPAN LTD), 10 November 1995 (1995-11-10)
- PATENT ABSTRACTS OF JAPAN vol. 1997, no. 10, 31 October 1997 (1997-10-31) -& JP 09 161285 A (SONY CORP), 20 June 1997 (1997-06-20)
- PATENT ABSTRACTS OF JAPAN vol. 1998, no. 13, 30 November 1998 (1998-11-30) -& JP 10 208262 A (MITSUBISHI ELECTRIC CORP), 7 August 1998 (1998-08-07)
- PATENT ABSTRACTS OF JAPAN vol. 1998, no. 12, 31 October 1998 (1998-10-31) -& JP 10 198981 A (VICTOR CO OF JAPAN LTD), 31 July 1998 (1998-07-31)

## Description

The present invention relates to a method and apparatus for tracking error detection and more particularly, to an improved method and apparatus for tracking error detection in which a phase locked loop (PLL) is introduced into a conventional differential phase detection tracking error (DPD TE) method to increase the accuracy of tracking error detection.

In a conventional DPD TE method, phase differences are generated on the edges of pits or marks of an optical disk. The length of pits or marks recorded on an optical disk lies in various ranges. For example, in the case of digital versatile disk-ROM (DVD-ROM), a length ranges from 3T to 14T where T is the duration of a channel clock of the disk. If there are a lot of pits or marks having a short length, phase difference detection can be performed many times, thereby enhancing the reliability of a tracking error signal derived therefrom. Conversely, if there are more pits or marks having a long length, the number of times phase difference detection may be done is reduced, thereby degrading the reliability of a tracking error signal. Further, a spectrum component, according to a modulation method of signal recorded on a disk, is closely related to outputs of AC+ and BD+, and a low-frequency component of the spectrum acts on noise with regard to a tracking error signal which is used for following and determining the position of a tracking center.

According to a conventional DPD TE method, phase difference detection is supposed to be made from pits or marks at one time, so that the gain and characteristics of a detected signal deteriorate if the signal of pits or marks is adversely affected by defects or the like. A system of this type is disclosed in JP09161285 which reflects the nearest prior art. As the track density of an optical disk increases, the magnitude and gain of a tracking error signal according to the conventional DPD TE method decrease. Thus, the conventional DPD TE method has a disadvantage in that it is difficult to precisely control tracking in a high- density track structure.

JP10302277 describes an optical disc device and tracking error signal generating method. The device has a PLL which generates a data reading clock signal, an automatically variable frequency waveform equalizer, a comparator, an external control delay device which adjusts a phase difference balance, a phase comparator which detects the phase difference and a charge pump for charging/discharging. The automatically variable waveform equalizer can change frequency characteristics in accordance with an external input.

It is an aim of embodiments of the present invention to provide a method of improving the accuracy of a tracking error detection with the introduction of a phase locked loop (PLL) into a conventional differential phase detection tracking error (DPD TE) method.

It is another aim of embodiments of the present invention to provide an apparatus using the above method. According to a first aspect of the present invention, there is provided a tracking error detecting method for producing of a tracking error signal as a difference signal of optical detection signals generated from more than two optical detectors positioned along a diagonal line from a track center, the method comprising the steps of: binarizing each of the outputs of the optical detectors; generating clock signals synchronized with each of the outputs obtained by the binarization; by phase locking detecting a phase difference between the synchronized clock signals output from the phase locking; and low-pass filtering the output of the phase difference detection to output the result as the tracking error signal.

According to a second aspect of the invention, there is provided a tracking error detecting apparatus for producing a tracking error signal as a difference signal of optical detection signals generated from more than two optical detectors positioned along a diagonal line from a track center, the apparatus comprising: binarizers for binarizing each of the outputs of the optical detectors; phase locked loops for generating clock signals synchronized with each of the outputs of the binarizers; a phase difference detector for detecting a phase difference between the synchronized clock signals output from the phase locked loops; and a low-pass filter for filtering the output of the phase difference detector to output the result as the tracking error signal.

The apparatus preferably comprises equalizers for reinforcing the high-frequency components of the outputs of the optical detectors to output the result to the binarizers.

Preferably, the equalizers are arranged in use to remove low-frequency components of a spectrum from the outputs of the optical detectors, according to a recording modulation method of a signal recorded on a disk.

Preferably, a clock signal provided to the phase locked loops is a channel clock signal.

The tracking error detecting apparatus may further comprise a frequency divider for dividing the frequency of the channel clock signal by n (n=2,3,4,...) to output the result to the phase locked loops when the phase of an output signal is inverted.

The phase difference detector may generate a first phase difference signal indicating that a first synchronized clock signal output from the phase locked loops leads a second synchronized clock signal output from the phase locked loops, and a second phase difference signal indicating that the second synchronized clock signal leads the first synchronized clock signal, and wherein the low-pass filters include first and second low-pass filters for filtering the first and second phase difference signals, respectively.

The tracking error detecting apparatus may further comprise a differential amplifier for generating a tracking error signal corresponding to a difference signal of the outputs of the first and second low-pass filters.

According to another aspect of the invention, there is provided a tracking error detecting apparatus characterised by being arranged to for produce a tracking error signal as a difference signal of optical detection signals generated from two optical detectors disposed at the outside of the track center of a three-section optical detection unit, the apparatus comprising: for binarizing each of the outputs of the two optical detectors; a phase difference detector for detecting a phase difference between the outputs of the binarizers; and a low-pass filter for filtering the output of the phase difference detector to output the result as the tracking error signal.

The tracking error detecting apparatus may further comprise phase locked loops coupled to the binarizers and the phase difference detector, which are for generating clock signals synchronized with each of the outputs of the binarizers to output the synchronized signals to the phase difference detector, wherein the phase difference detector detects a phase difference between the synchronized signals output from the phase locked loops.

For a better understanding of the invention, and to show how embodiments of the same may be carried into effect, reference will now be made, by way of example, to the accompanying diagrammatic drawings in which:
Figure 1 is a block diagram of a tracking error detecting apparatus according co a conventional differential phase detection tracking error (DPD TE) method;
Figure 2 is a wave form diagram showing the operation of the apparatus shown in Figure 1;
Figure 3 is a block diagram of a first preferred embodiment of a tracking error detecting apparatus according to the present invention;
Figure 4 is a wave form diagram showing the operation of the apparatus shown in Figure 3;
Figure 5 is a block diagram of a second preferred embodiment of a tracking error detecting apparatus according to the present invention;
Figure 6 is a block diagram of a third preferred embodiment of a tracking error detecting apparatus according to the present invention;
Figure 7 is a block diagram of a fourth preferred embodiment of a tracking error detecting apparatus according to the present invention;
Figure 8 is a graph of gain versus frequency for the equalizers shown in Figure 3 and 5-7;
Figure 9 is a graph showing the result of comparing a tracking error signal generated by a tracking error detecting apparatus according to embodiments of the present invention, with a tracking signal generated by a conventional DPD TE method; and
Figure 10 is a graph showing the characteristic of gain of tracking error signals generated by a tracking error detecting apparatus according to the present invention and a conventional DPD TE method.

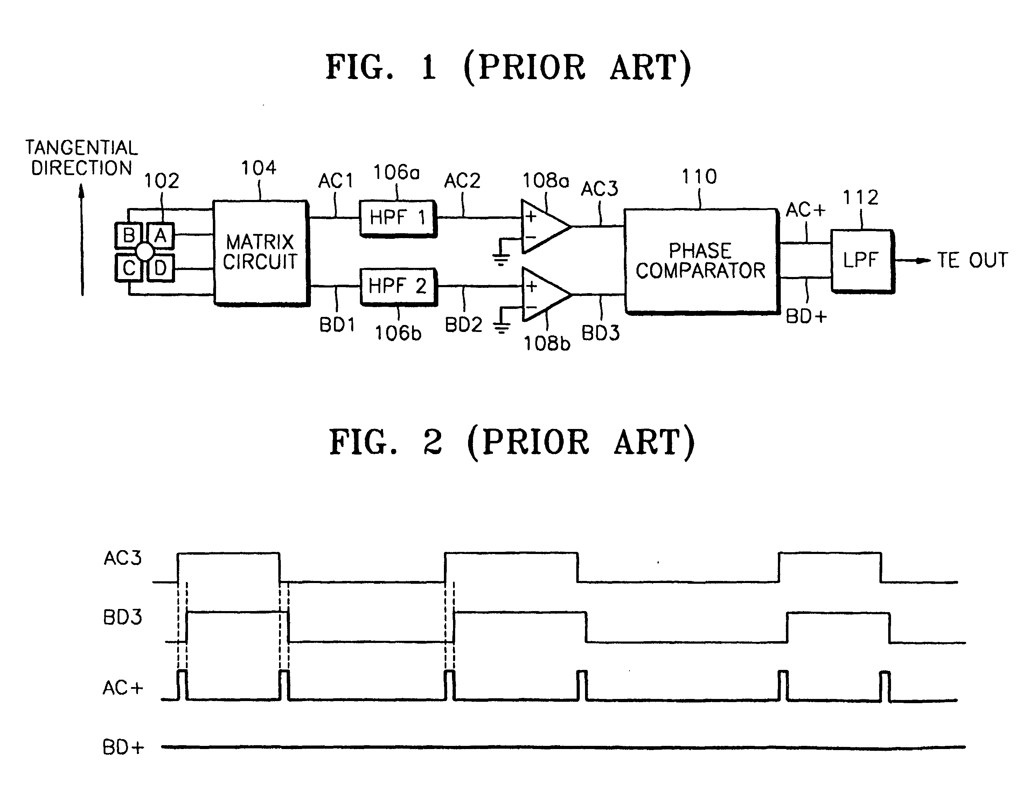

Referring to Figure 1 which shows the configuration of a tracking error detecting apparatus according to a conventional differential phase detection tracking error (DPD TE) method, The apparatus shown in Figure 1 includes a four-section optical detection unit 102, a matrix circuit 104, high-pass filters (HPFs) 106a and 106b, comparators 108a and 108b, a phase comparator 110, and a low-pass filter (LPF) 112. The apparatus detects a phase difference between the signals output from the four-section optical detection unit 102 to determine the position of a laser spot. If the laser spot deviates from a track center, then it results in a time delay or a phase difference between A+C and B+D signals. Thus, a tracking error signal is generated by detecting the time delay between those signals.

Specifically, the matrix circuit 104 for adding optical detection signals A and B, and C and D, which are positioned along a diagonal line among the outputs (A, B, C and D) of the four-section optical detection unit 102, turns the outputs AC1 and BD1 into A+C and B+D, respectively. The HPFs 106a and 106b for reinforcing the high-frequency components of AC1 and BD 1 provided from the matrix circuit 104 differentiate AC 1 and BD 1, and output the results, i.e., AC2 and BD2 to the comparators 108a and 108b. The comparators 108a and 108b for binarizing each of AC2 and BD2 provided from the HPFs 106a and 106b, compare AC2 and BD2 with a predetermined level (a ground level in Figure 1) to output the results, i.e., AC3 and BD3 to the phase comparator 110.

The phase comparator 110 for detecting a phase difference between AC3 and BD3 provided from the comparators 108a and 108b compares the phases of AC3 and BD3 to output the results, i.e., AC+ and BD+ to the LPF 112. In this case, AC+ is a phase difference signal generated when AC3 leads BD3 in phase, while BD+ is a phase difference signal generated when BD3 leads AC3 in phase. The LPF 112 for filtering AC+ and BD+ input from the phase comparator 110 outputs the result as a tracking error signal.

Figure 2 is a wave form diagram illustrating operation of the apparatus shown in Figure 1. In Figure 2, showing the case in which AC3 leads BD3 in phase, the wave forms of AC3, BD3, AC+ and BD+ signals are illustrated sequentially from the top. As shown in Figure 2, it can be found that if a laser spot deviates by a predetermined amount there exists a phase difference between AC3 and BD3 which is in turn reflected into AC+ and BD+. If AC3 leads BD3 in phase, a tracking error signal is greater than a predetermined central value, but in the opposite case, it is less than the predetermined central value. The degree to which a tracking error signal deviates from the central value corresponds to the distance by which the laser spot is departed from the track center.

The phase comparator 110 of the apparatus shown in Figure 1 detects a phase difference at a rising or falling edge of AC3 and BD3. The rising or falling edges of AC3 and BD3 correspond to the edges of pits or marks recorded on an optical disk. In other words, the apparatus shown in Figure 1 detects a phase difference once on every edge of pits and marks recorded on an optical disk. Thus, as the number of pits or marks increases, the reliability of a tracking error signal increases, and as the number of pits or marks decreases, the reliability of the signal decreases. If pits or marks are affected by defects of an optical disk or other factors, the gain and characteristics of a tracking error signal become worse. A spectrum component according to a recording modulation method is closely connected with AC+ and BD+, and especially a low-frequency component of the spectrum works on noise with regard to a tracking error signal. Further, in the case of a tracking error signal according to the DPD TE method, the magnitude and gain are reduced as track density is increased, which makes the accurate control of tracking in a high track- density structure difficult.

In order to improve such drawbacks, a tracking error detecting method according to the present invention involves generating clock signals synchronized with each of the binarized signals AC+ and BD+, to detect a phase difference between those clock signals. In this case, all pulses in the synchronized clock signals have the phase difference components of AC+ and BD+, so that a tracking error signal can be generated regardless of the lengths of pits or marks recorded on a disk.

Specifically, at the outset, outputs of optical detectors which are disposed along a diagonal line from a track center are each binarized. Secondly, clock signals synchronized with each of the outputs obtained from the binarization are generated by PLL circuits. When a laser spot deviates from a track center, the outputs AC+ and BD+ obtained from the binarization have a phase difference corresponding to the deviation degree of the laser spot with regard to the track center, and the clocks which are phase locked to the outputs have the same phase difference. Thirdly, a phase difference between the synchronized clock signals output in the phase locking is detected. All clocks in the synchronized clock signals have the phase difference components of AC+ and BD+, so that a phase difference component is detected on a clock-by-clock basis. Lastly, the output from the phase difference detection is filtered by an LPF to obtain a tracking error signal.

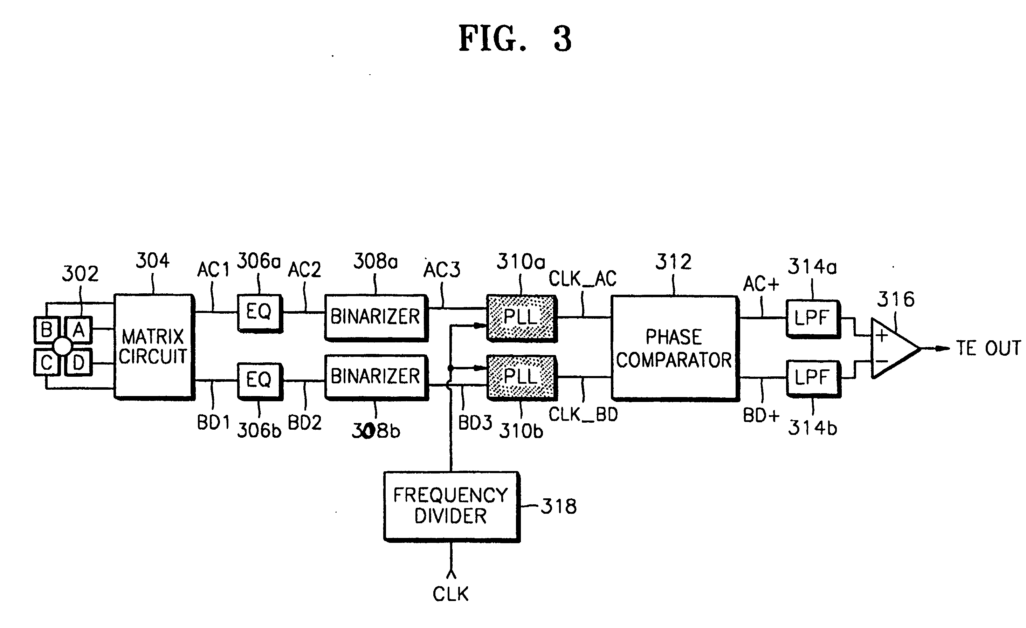

Figure 3 is a block diagram showing a first preferred embodiment of a tracking error detecting apparatus according to the present invention. The apparatus shown in Figure 3 includes a four-section optical detection unit 302, a matrix circuit 304, equalizers (EQs) 306a and 306b, binarizers 308a and 308b, PLLs 310a and 310b, a phase comparator 312, LPFs 314a and 314b, a differential amplifier 316, and a frequency divider 318.

The matrix circuit 304 for adding optical detection signals A and C, and B and D among the outputs A, B, C and D of the four-section optical detection unit 302, turns the outputs AC1 and BD1 into A+C and B+D, respectively. That is, the matrix circuit 304 produces summation signals of the signals generated by optical detectors which are positioned along a diagonal line from a track center. The EQs 306 a and 306b for strengthening the high-frequency components of AC1 and BD1 provided from the matrix circuit 304 and removing noise therefrom, differentiate AC1 and BD1 and remove noise therefrom to output the results AC2 and BD2 to the binarizers 308a and 308b. In other words, since the outputs A, B, C and D of the four-section optical detection unit 302 have weak high-frequency components, the high-frequency components of AC1 and BD1 provided from the matrix circuit 304 are reinforced through the EQs 306a and 306b. Further, as the outputs A, B, C and D of the four-section optical detection unit 302 contain a noise component in addition to signals reflected from an optical disk, EQs 306a and 306b eliminate the noise component in AC1 and BD1 provided from the matrix circuit 304.

The binarizers 308a and 308b for converting AC2 and BD2 provided from EQS 306a and 306b into binary digital signals binarize AC2 and BD2 to output the results AC3 and BD3 to the PLLs 310a and 310b. Through the binarizers 308a and 308b, binarization level compensation for AC2 and BD2 provided from the EQS 306a and 306b can be performed. The PLLs 310a and 310b for generating clock signals (CLKs) synchronized with AC3 and BD3 which are provided from the binarizers 308a and 308b accept the input signals CLK, AC3 and BD3 and output CLK_AC and CLK_BD, synchronized with AC3 and BD3, to the phase comparator 312. The phase comparator 312 for detecting a phase difference between CLK_AC and CLK_BD, provided from the PLLs 310a and 310b, compares the phases of CLK_AC and CLK_BD to output the results AC+ and BD+ to LPFs 314a and 314b, respectively. In this case, AC+ and BD+ are phase difference signals generated when CLK_AC leads CLK_BD in phase and when CLK_BD leads CLK_AC in phase, respectively.

The LPFs 314a and 314b filter AC+ and BD+ provided from the phase comparator 312 to output the results to the differential amplifier 316. The differential amplifier 316 amplifies the difference signal of AC+ and BD+ filtered by the LPFs 314a and 314b to output the result as a tracking error signal (TE).

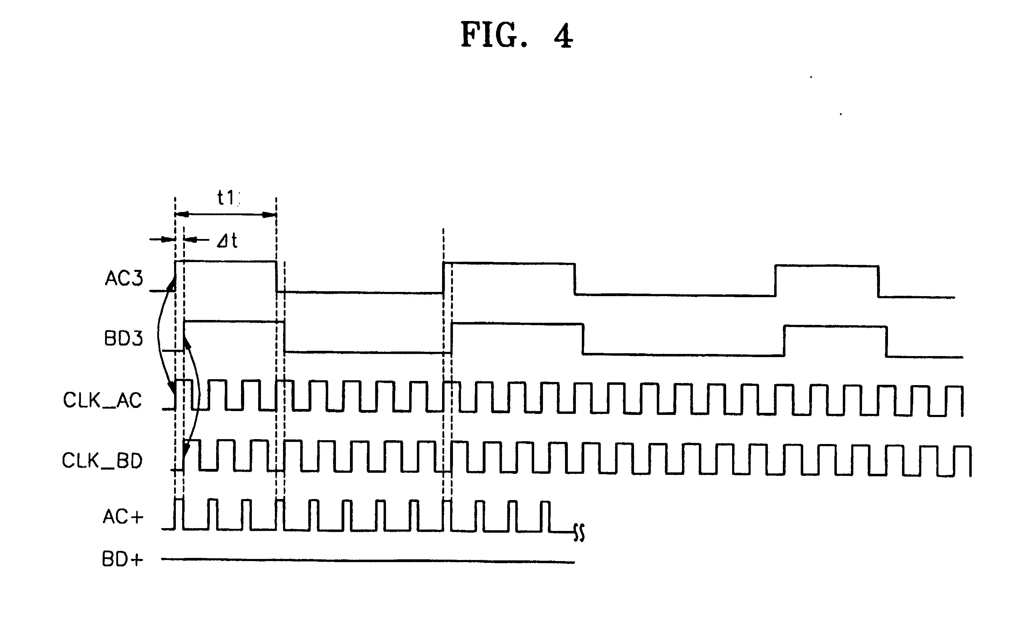

Figure 4 is a wave form diagram showing the operation of the apparatus shown in Figure 3. In Figure 4 showing the case in which AC3 leads BD3 in phase, the wave forms of AC3, BD3, CLK_AC, CLK_BD, AC+, and BD+ signals are illustrated sequentially from the top. As shown in Figure 4, it can be found that if a laser spot deviates from a track center by a predetermined amount, a phase difference existing between AC3 and BD3 is transferred to CLK_AC and CLK_BD, doubling by a CLK frequency. Figure 4 indicates that CLK_AC and CLK_BD synchronized with AC3 and BD3 respectively are generated and a phase difference Δt created between AC3 and BD3 is transferred to the outputs CLK_AC and CLK_BD of the PLLs 310a and 310b. Thus, the phase difference value Δt can be derived as a result of comparing the phases of CLK_AC and CLK_BD.

The conventional apparatus detects the phase difference Δt once in an interval t1, while the apparatus according to embodiments of the present invention can detect the phase difference Δt once every CLK cycle. When a channel clock is used as CLK, the phase difference Δt can be detected once every channel clock cycle T regardless of the lengths of pits or marks recorded on an optical disk. The frequency divider 318 frequency divides CLK at an interval where inversion of the output signal takes place, to output the result to the PLLs 310a and 310b. In the apparatus of Figure 3, a tracking servo control becomes unstable at the interval where inversion of the output signal happens. This is because inversion of the output signals causes deviation from the extent of phase difference detection by the PLLs 310a and 310b. Thus, in order to compensate for the deviation, the frequency of CLK is divided at the interval where inversion of the output signal occurs and the result is provided to the PLLs 310a and 310b.

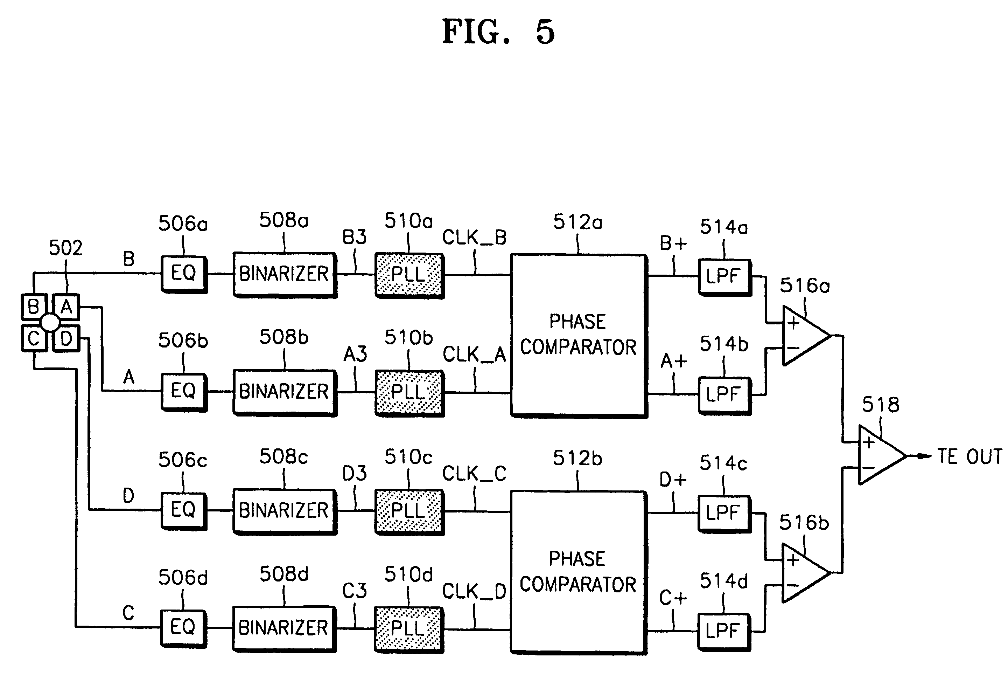

Figure 5 is a block diagram showing a second embodiment of a tracking error detecting apparatus according to the present invention. The apparatus shown in Figure 5 includes a four-section optical detection unit 502, EQs 506a-506d, binarizers 508a-508d, PLLs 510a-510d, phase comparators 512a and 512b, LPFs 514a-514d, differential amplifiers 516a and 516b, and an adder 518. Since outputs A, B, C and D of the four-section optical detection unit 302 have weak high-frequency components, the high-frequency component of A, B, C and D provided from the four-section optical detection unit 502 is reinforced through the EQs 506a-506d. Further, as the outputs A, B, C and D of the four-section optical detection unit 302 contain noise in addition to signals reflected from an optical disk, EQs 506a-506d eliminate the noise components of A, B, C and D provided from the four-section optical detection unit 502.

The binarizers 508a-508d for converting signals provided from EQs 506a-506b into binary digital signals binarize those signals to output the results to the PLLs 510a-510d. The PLLs 510a-510d for generating CLKs synchronized with the signals which are provided from the binarizers 508a-508d receive as input CLK and the signals provided from the binarizers 508a-508d to output CLKs synchronized with each of the signals provided from the binarizers 508a-508d to the phase comparators 512a and 512b. The phase comparators 512a and 512b are for detecting phase differences between CLK_A and CLK_B and between CLK_C and CLK_D provided from the PLLs 510a-510d. The phase comparator 512a compares the phases of CLK_A and CLK_B to output the results A+ and B+ to the LPFs 514a and 514b, respectively, while the phase comparator 512b compares the phases of CLK_C and CLK_D to output the results C+ and D+ to the LPFs 514c and 514d, respectively. In this case, A+ and B+ are phase difference signals generated when CLK_A leads CLK_B in phase and when CLK_B leads CLK_A in phase, respectively. Further, C+ and D+ are phase difference signals generated when CLK_C leads CLK_D in phase and when CLK_D leads CLK_C in phase, respectively.

The LPFs 514a-514d filter A+, B+, C+ and D+ provided from the phase comparators 512a and 512b to output the results to the differential amplifiers 516a and 516b. The differential amplifiers 516a and 516b amplify the difference signals of A+ and B+, and C+ and D+ filtered by the LPFs 514a to 514d to output the results to the adder 518. The adder for adding signals provided from the differential amplifiers 516a and 516b adds those signals to output the result as TE.

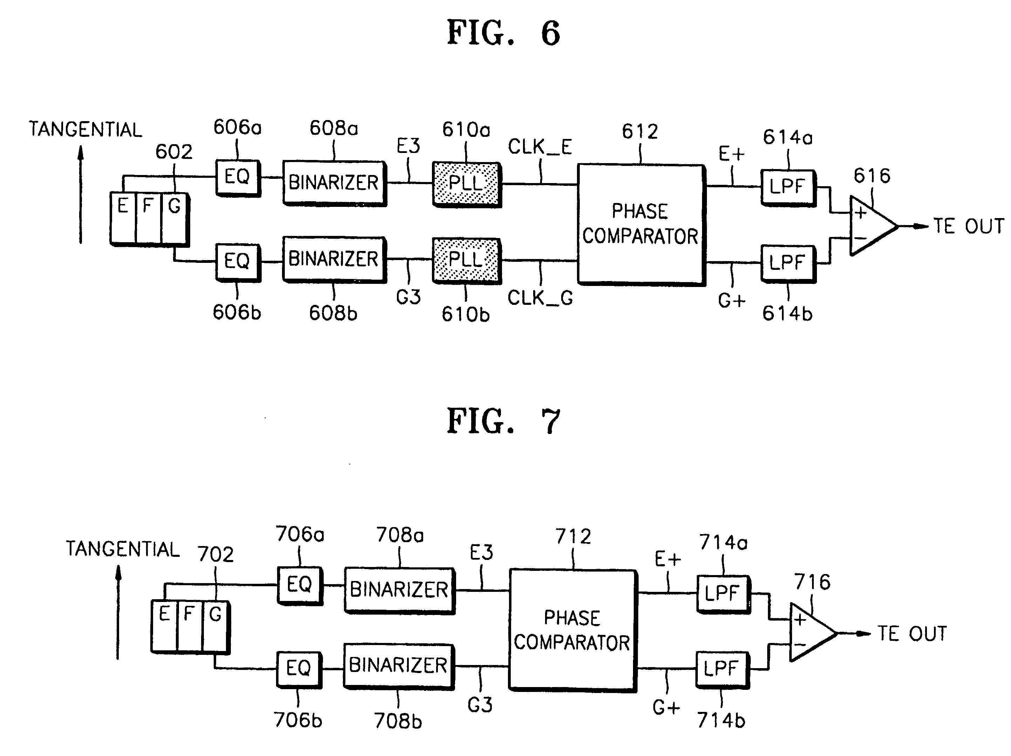

Figure 6 is a block diagram showing a third preferred embodiment of a tracking error detecting apparatus according to the present invention, in which TE is produced using outputs of a three-section optical detection unit. The apparatus shown in Figure 6 includes a three-section optical detection unit 602, EQs 606a and 606b, binarizers 608a and 608b, PLLs 610a and 610b, a phase comparator 612, LPFs 614a and 614b, and a differential amplifier 616.

The EQs 606 a and 606b for strengthening the high-frequency components of signals E and G provided from optical detectors disposed at the outside of the three-section optical detection unit 602 and removing noise therefrom, differentiate E and G and remove noise therefrom to output the results to the binarizers 608a and 608b. The binarizers 608a and 608b for converting the signals provided from EQs 606a and 606b into binary digital signals binarize those signals to output the results E3 and G3 to the PLLs 610a and 610b. The PLLs 610a and 610b for generating CLKs synchronized with the signals which are provided from the binarizers 608a and 608b receive as input CLK, E3 and G3 to output CLK_E and CLK_G synchronized with E3 and G3 to the phase comparator 612. The phase comparator 612 for detecting a phase difference between CLK_E and CLK_G provided from the PLLs 610a and 610b, compares the phases of CLK_E and CLK_G and outputs the results E+ and G+ to the LPFs 614a and 614b, respectively. In this case, E+ and G+ are phase difference signals generated when CLK_E leads CLK_G in phase and when CLK_G leads CLK_E in phase, respectively.

The LPFs 614a and 614b filter E+ and G+ provided from the phase comparator 612 to output the results to the differential amplifier 616. The differential amplifier 616 amplifies the difference signal of E+ and G+ filtered by the LPFs 614a and 614b to output the result as TE.

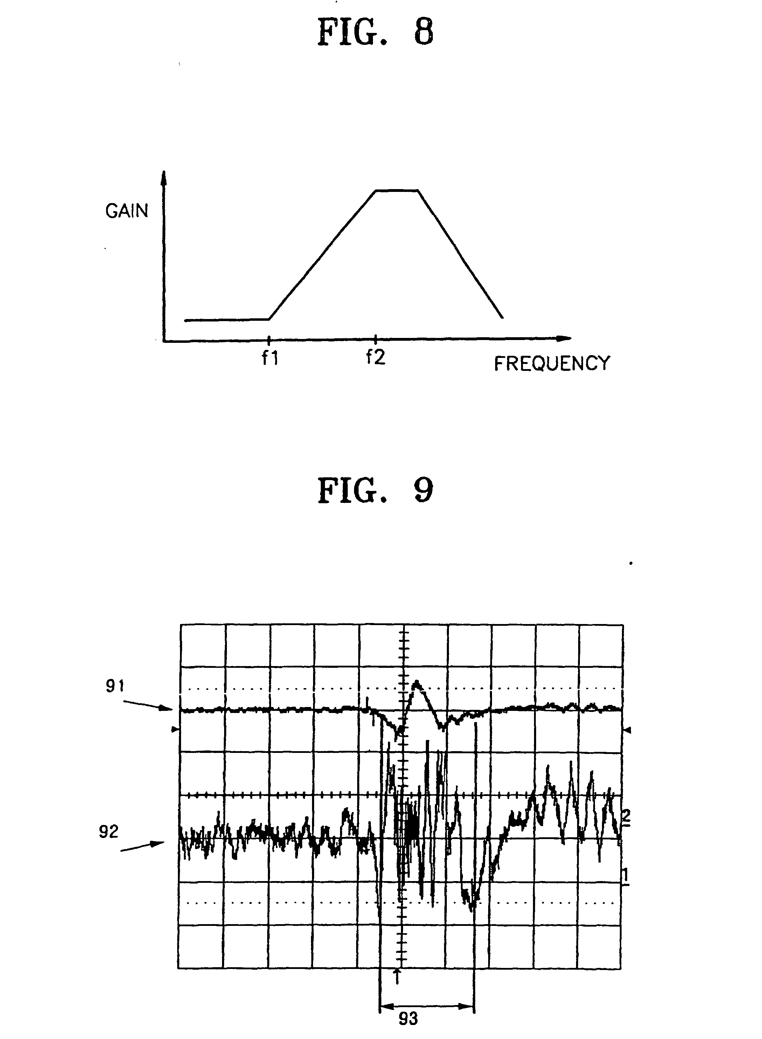

Figure 7 is a block diagram showing a fourth preferred embodiment of a tracking error detecting apparatus according to the present invention in which TE is produced using the output of a three-section optical detection unit. The apparatus shown in Figure 7 includes a three-section optical detection unit 702, EQs 706a and 706b, binarizers 708a and 708b, a phase comparator 712, LPFs 714a and 714b, and a differential amplifier 716.

The EQS 706a and 706b for strengthening the high-frequency components of signals E and G provided from optical detectors disposed at the outside of the three-section optical detection unit 702 and removing noise therefrom, differentiate E and G and remove noise therefrom to output the results to the binarizers 708a and 708b. The binarizers 708a and 708b for converting the signals provided from EQs 706a and 706b into binary digital signals binarize those signals to output the results E3 G3 to the phase comparator 712. The phase comparator 712 for detecting a phase difference between E3 and G3 provided from the EQs 706a and 706b, compares the phases of E3 and G3 to output the results E+ and G+ to the LPFs 614a and 614b, respectively. In this case, E+ and G+ are phase difference signals generated when E3 leads G3 in phase and when G3 leads E3 in phase, respectively.

The LPFs 714a and 714b filter E+ and G+ provided from the phase comparator 712 to output the results to the differential amplifier 716. The differential amplifier 716 amplifies the difference signal of E+ and G+ filtered by the LPFs 714a and 714b to output the result as TE.

Figure 8 is a graph showing operation of the EQs of Figure 3 and 5-7, in which the vertical axis and the horizontal axis indicate gain and frequency, respectively. The EQs having the properties as shown in Figure 8 perform the function of controlling their properties so that an input signal can be positioned between a first frequency f1 and a second frequency f2 to amplify the high-frequency component which is close to the second frequency f2.

Figure 9 is a graph showing the result of comparing a tracking error signal generated by a tracking error detecting apparatus according to the present invention with a tracking signal generated by a conventional DPD TE method. In Figure 9, reference numerals 91 and 92 respectively represent tracking error signals generated by a conventional DPD TE method and a tracking error detecting apparatus according to the present invention, and it can be seen that the gain of the latter is greater than that of the former. Further, an interval 93 indicates the section where inversion of output signal occurs so that a phase difference will exceed the detection limit if the phase difference is detected using the CLKs generated from the PLLs as in the present invention. If this is the case, the frequency of the PLL CLK can be divided by n (n=2,3,4,...) and the result is output to a phase difference detector, which increases the detection extent so that intervals such as 93 will not exist.

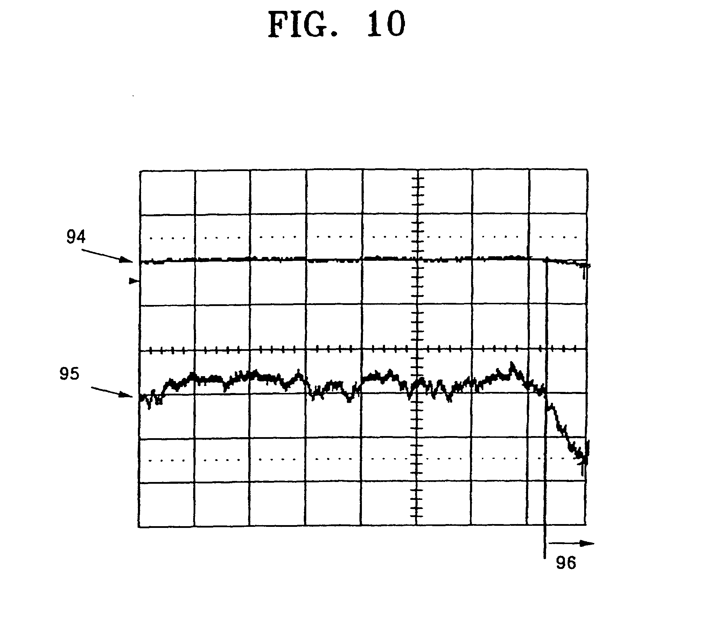

Figure 10 is a graph showing the characteristic of gain of tracking error signals generated by a tracking error detecting apparatus according to the present invention and a conventional DPD TE method. In Figure 10, reference numerals 94 and 95 respectively indicate the gains of tracking error signals generated by the conventional DPD TE method and the tracking error detecting apparatus according to the present invention. If both are measured under the same conditions, it can be seen that the gain of a tracking error signal generated in the apparatus according to the present invention is about 10 times greater than the gain of the other. An interval 96 is the section where an optical pickup jumps on an adjacent track in a normal tracking state. While the interval 96 cannot be shown clearly in a tracking error signal generated by the conventional DPD TE method, it is output as a large value in a tracking error signal generated by the present invention.

As described in the foregoing, a tracking error detecting apparatus according to the present invention is capable of generating a tracking error signal which does not vary depending on the lengths of pits and marks recorded on a optical disk, so that reliability of the tracking error signal can be enhanced.

While this invention has been particularly shown and described with references to preferred embodiments thereof, it will be understood by those skilled in the art that various changes in form and details may be made therein without departing from the scope of the invention as defined in the appended claims.

## Claims

1. A tracking error detecting method for producing a tracking error signal as a difference signal of optical detection signals generated from more than two optical detectors positioned along a diagonal line from a track center, the method comprising the steps of:
binarizing each of the outputs of the optical detectors;
generating clock signals synchronized with each of the outputs obtained by the binarization by phase locking;
phase difference detection for detecting a phase difference between the synchronized clock signals output from the phase locking; and
low-pass filtering the output of the phase difference detection to output the result as the tracking error signal.

2. A tracking error detecting apparatus for producing a tracking error signal as a difference signal of optical detection signals generated from more than two optical detectors positioned along a diagonal line from a track center, the apparatus comprising:
binarizers (308a, 308b; 508a, 508b, 508c, 508d; 608a, 608b) for binarizing each of the outputs of the optical detectors;
phase locked loops (310a, 310b; 510a-d; 610a, 610b) for generating clock signals synchronized with each of the outputs of the binarizers (308a, 308b; 508a, 508b, 508c, 508d; 608a, 608b);
a phase difference detector (312; 512a, 512b; 612) for detecting a phase difference between the synchronized clock signals output from the phase locked loops (310a, 310b; 510a-d; 610a, 610b) ; and
a low-pass filter (314a, 314b; 514a-d; 614a, 614b) for filtering the output of the phase difference detector (312; 512a, 512b; 612) to output the result as the tracking error signal.

3. The tracking error detecting apparatus of claim 2, further comprising equalizers (306a, 306b; 506a-d; 606a, 606b) for reinforcing the high-frequency components of the outputs of the optical detectors to output the result to the binarizers (308a, 308b; 508a-d; 608a, 606b).

4. The tracking error detecting apparatus of claim 3, wherein the equalizers (306a, 306b; 506a-d; 606a, 606b) are arranged in use to remove low-frequency components of a spectrum from the outputs of the optical detectors (302; 502; 602), according to a recording modulation method of a signal recorded on a disk.

5. The tracking error detecting apparatus of claim 2, 3 or 4, wherein a clock signal provided to the phase locked loops (310a, 310b; 510a-d; 610a, 610b) is a channel clock signal.

6. The tracking error detecting apparatus any of claims 2 to 5, further comprising a frequency divider (318) for dividing the frequency of the channel clock signal by n (n=2,3,4,...) to output the result to the phase locked loops when the phase of an output signal is inverted.

7. The tracking error detecting apparatus of any of claims 2 to 6, wherein the phase difference detector (312; 512a, 512b; 612) generates a first phase difference signal indicating that a first synchronized clock signal output from the phase locked loops leads a second synchronized clock signal output from the phase locked loops, and a second phase difference signal indicating that the second synchronized clock signal leads the first synchronized clock signal, and
wherein the low-pass filters (314a, 314b; 514a-d; 614a, 614b) include first and second low-pass filters for filtering the first and second phase difference signals, respectively.

8. The tracking error detecting apparatus of any of claims 2 to 7, further comprising a differential amplifier (316; 516a, 516b, 518; 616) for generating a tracking error signal corresponding to a difference signal of the outputs of the first and second low-pass filters (314a, 314b; 614a, 614b).

9. A tracking error detecting apparatus for producing a tracking error signal as a difference signal of optical detection signals generated from two optical detectors disposed at the outside of the track center of a three-section optical detection unit, the apparatus comprising:
binarizers (308a, 308b; 508a-d; 608a, 608b; 708a, 708b) for binarizing each of the outputs of the two optical detectors;
a phase difference detector (312; 512a, 512b; 612; 712) for detecting a phase difference between the outputs of the binarizers (308a, 308b; 508a-d; 608a, 608b; 708a, 708b); and
a low-pass filter (314a, 314b; 514a-d; 614a, 614b; 714a, 714b) for filtering the output of the phase difference detector to output the result as the tracking error signal.

10. The tracking error detecting apparatus of claim 9, further comprising phase locked loops (310a, 310b; 510a-d; 610a, 610b) coupled to the binarizers (308a, 308b; 508a-d; 608a, 608b) and the phase difference detector (312; 512a, 512b; 612), which are for generating clock signals synchronized with each of the outputs of the binarizers (308, 308b; 508a-d; 608a, 608b) to output the synchronized signals to the phase difference detector, (312; 5123a, 512b; 612)
wherein the phase difference detector (312; 512a, 512b; 612) detects a phase difference between the synchronized signals output from the phase locked loops (310a, 310b; 510a-d; 610a, 610b).

## Patentansprüche

1. Spurfolgefehler-Erfassungsverfahren zum Erzeugen eines Nachlauffehlersignals als ein Differenzsignal von optischen Erfassungssignalen, die von mehr als zwei entlang einer diagonalen Linie von einer Spurmitte gelegenen optischen Detektoren erzeugt werden, wobei das Verfahren die folgenden Schritte umfasst:
Binärisieren jedes der Ausgänge der optischen Detektoren;
Erzeugen von Taktsignalen, die durch Phasenverriegelung mit jedem der durch die Binärisierung erhaltenen Ausgänge synchronisiert sind;
Phasendifferenzerfassung zur Erfassung einer Phasendifferenz zwischen den von der Phasenverriegelung ausgegebenen synchronisierten Taktsignalen, und
Tiefpassfittern des Ausgangs der Phasendifferenzerfassung, um das Ergebnis als das Nachlauffehlersignal auszugeben.

2. Spurfolgefehler-Erfassungsvorrichtung zum Erzeugen eines Nachlauffehlersignals als ein Differenzsignal von optischen Erfassungssignalen, die von mehr als zwei entlang einer diagonalen Linie von einer Spurmitte gelegenen optischen Detektoren erzeugt werden, wobei die Vorrichtung umfasst:
Binärisierer (308a, 308b; 508a, 508b, 508c, 508d; 608a, 608b) zum Binärisieren jedes der Ausgänge der optischen Detektoren;
phasenverriegelte Schleifen (310a, 310b; 510a-d; 610a, 610b)zum Erzeugen von mit jedem der Ausgänge der Binärisierer (308a, 308b; 508a, 508b, 508c, 508d; 608a, 608b) synchronisierten Taktsignalen;
einen Phasendifferenzdetektor (312; 512a, 512b; 612) zum Erfassen einer Phasendifferenz zwischen den von den phasenverriegelten Schleifen (310a, 310b; 510a-d; 610a, 610b) ausgegebenen synchronisierten Taktsignalen, und
ein Tiefpassfifter (314a, 314b, 514a-d; 614a, 614b) zur Filterung des Ausgangs des Phasendifferenzdetektors (312, 512a, 512b; 612), um das Ergebnis als das Nachlauffehlersignal auszugeben.

3. Spurfolgefehler-Erfassungsvorrichtung nach Anspruch 2, die des Weiteren Ausgleicher (306a, 306b; 506a-d; 606a, 606b) zum Verstärken der Hochfrequenzkomponenten der Ausgänge der optischen Detektoren umfasst, um das Ergebnis an die Binärisierer (308a, 308b; 508a-d, 608a, 608b) auszugeben.

4. Spurfolgefehler-Erfassungsvorrichtung nach Anspruch 3, wobei die Ausgleicher (306a, 306b; 506a-d; 606a, 606b) gebraucht werden, um Niederfrequenzkomponenten eines Spektrums aus den Ausgängen der optischen Detektoren (302; 502; 602) entsprechend einem Aufzeichnungs-Modulationsverfahren eines auf einer Platte aufgezeichneten Signals zu entfernen.

5. Spurfolgefehler-Erfassungsvorrichtung nach Anspruch 2, 3 oder 4, wobei ein an die phasenverriegelten Schleifen (310a, 310b; 510a-d; 610a, 610b) geliefertes Taktsignal ein Kanaltaktsignal ist.

6. Spurfolgefehler-Erfassungsvorrichtung nach einem der Ansprüche 2 bis 5, die des Weiteren einen Frequenzteiler (318) umfasst, der die Frequenz des Kanaltaktsignals durch n (n=2, 3, 4,...) teilt, um das Ergebnis an die phasenverriegelten Schleifen auszugeben, wenn die Phase eines Ausgangssignal invertiert ist.

7. Spurfolgefehler-Erfassungsvorrichtung nach einem der Ansprüche 2 bis 6, wobei der Phasendifferenzdetektor (312; 512a, 512b; 612) ein erstes Phasendifferenzsignal, das anzeigt, dass ein von den phasenverriegelten Schleifen ausgegebenes erstes synchronisiertes Taktsignal einem von den phasenverriegelten Schleifen ausgegebenen zweiten synchronisierten Taktsignal voreilt, und ein zweites Phasendifferenzsignal erzeugt, das anzeigt, dass das zweite synchronisierte Taktsignal dem ersten synchronisierten Taktsignal voreilt, und
wobei die Tiefpassfilter (314a, 314b; 514a-d, 614a, 614b) ein erstes und zweites Tiefpassfilter umfassen, die das erste bzw. zweite Phasendifferenzsignal filtern.

8. Spurfolgefehler-Erfassungsvorrichtung nach einem der Ansprüche 2 bis 7, die des Weiteren einen Differenzverstärker (316; 516a, 516b, 518; 616) umfasst, der ein Nachlauffehlersignal entsprechend einem Differenzsignal der Ausgänge des ersten und zweiten Tiefpassfilters (314a, 314b; 614a, 614b) erzeugt.

9. Spurfolgefehler-Erfassungsvorrichtung zum Erzeugen eines Nachlauffehlersignals als ein Differenzsignal von optischen Erfassungssignalen, die von zwei außerhalb der Spurmitte einer optischen Dreiabschnitts-Erfassungseinheit angeordneten optischen Detektoren erzeugt werden, wobei die Vorrichtung umfasst:
Binärisierer (308a, 308b; 508a-d; 608a, 608b, 708a, 708b) zum Binärisieren jedes der Ausgänge der zwei optischen Detektoren;
einen Phasendifferenzdetektor (312; 512a, 512b; 612; 712) zum Erfassen einer Phasendifferenz zwischen den Ausgängen der Binärisierer (308a, 308b; 508a-d; 608a, 608b, 708a, 708b), und
ein Tiefpassfilter (314a, 314b; 514a-d; 614a, 614b; 714a, 714b) zur Filterung des Ausgangs des Phasendifferenzdetektors, um das Ergebnis als das Nachlauffehlersignal auszugeben.

10. Spurfolgefehler-Erfassungsvorrichtung nach Anspruch 9, die des Weiteren phasenverriegelte Schleifen (310a, 310b; 510a-d; 610a, 610b) umfasst, die mit den Binärisierern (308a, 308b; 508a-d; 608a, 608b) und dem Phasendifferenzdetektor (312; 512a, 512b; 612) verbunden sind und zum Erzeugen von Taktsignalen sind, die mit jedem der Ausgänge der Binärisierer (308a, 308b; 508a-d; 608a, 608b) synchronisiert sind, um die synchronisierten Signale an den Phasendifferenzdetektor (312; 512a, 512b; 612) auszugeben,
wobei der Phasendifferenzdetektor (312; 512a, 512b; 612) eine Phasendifferenz zwischen den von den phasenverriegelten Schleifen (310a, 310b; 510a-d; 610a, 610b) ausgegebenen synchronisierten Signalen erfasst.

## Revendications

1. Procédé de détection d'erreur de suivi de piste pour produire un signal d'erreur de suivi de piste en tant que signal de différence de signaux de détection optique généré par plus de deux détecteurs optiques positionnés le long d'une ligne diagonale par rapport au centre de la piste, le procédé comportant les étapes consistant à :
binariser chacune des sorties des détecteurs optiques,
générer des signaux d'horloge synchronisés avec chacune des sorties obtenues par la binarisation via un asservissement de phase,
une détection de différence de phase pour détecter une différence de phase entre les signaux d'horloge synchronisés délivrés en sortie par l'asservissement de phase, et
soumettre à un filtrage passe-bas la sortie de la détection de différence de phase afin de délivrer en sortie le résultat en tant que signal d'erreur de suivi de piste.

2. Dispositif de détection d'erreur de suivi de piste pour produire un signal d'erreur de suivi de piste en tant que signal de différence de signaux de détection optique généré par plus de deux détecteurs optiques positionnés le long d'une ligne diagonale à partir du centre de la piste, le dispositif comportant :
des dispositifs de binarisation (308a, 308b ; 508a, 508b, 508c, 508d ; 608a, 608b) pour binariser chacune des sorties des détecteurs optiques,
des boucles à verrouillage de phase (310a, 310b ; 510a à d ; 610a, 610b) pour générer des signaux d'horloge synchronisés avec chacune des sorties des dispositifs de binarisation (308a, 308b ; 508a, 508b, 508c, 508d ; 608a, 608b),
un détecteur de différence de phase (312 ; 512a, 512b ; 612) pour détecter une différence de phase entre les signaux d'horloge synchronisés délivrés en sortie par les boucles à verrouillage de phase (310a, 310b ; 510a à d ; 610a, 610b), et
un filtre passe-bas (314a, 314b ; 514a à d ; 614a, 614b) pour filtrer la sortie du détecteur de différence de phase (312 ; 512a, 512b ; 612) afin de délivrer en sortie le résultat en tant que signal d'erreur de suivi de piste.

3. Dispositif de détection d'erreur de suivi de piste selon la revendication 2, comportant en outre des égaliseurs (306a, 306b ; 506a à d ; 606a, 606b) pour renforcer les composantes haute fréquence des sorties des détecteurs optiques afin de délivrer en sortie le résultat aux dispositifs de binarisation (308a, 308b ; 508a à d ; 608a, 608b).

4. Dispositif de détection d'erreur de suivi de piste selon la revendication 3, dans lequel les égaliseurs (306a, 306b ; 506a à d ; 606a, 606b) sont conçus en fonctionnement pour supprimer des composantes haute fréquence d'un spectre provenant des sorties des détecteurs optiques (302 ; 502 ; 602), conformément à un procédé de modulation d'enregistrement d'un signal enregistré sur un disque.

5. Dispositif de détection d'erreur de suivi de piste selon la revendication 2, 3 ou 4, dans lequel un signal d'horloge délivré aux boucles à verrouillage de phase (310a, 310b ; 510a à d ; 610a, 610b) est un signal d'horloge de canal.

6. Dispositif de détection d'erreur de suivi de piste selon l'une quelconque des revendications 2 à 5, comportant en outre un diviseur de fréquence (318) pour diviser la fréquence du signal d'horloge de canal par n (n = 2, 3, 4,...) afin de délivrer en sortie le résultat aux boucles à verrouillage de phase lorsque la phase d'un signal de sortie est inversée.

7. Dispositif de détection d'erreur de suivi de piste selon l'une quelconque des revendications 2 à 6, dans lequel le détecteur de différence de phase (312 ; 512a, 512b ; 612) génère un premier signal de différence de phase indiquant qu'un premier signal d'horloge synchronisé délivré en sortie par les boucles à verrouillage de phase mène à un second signal d'horloge synchronisé délivré en sortie par les boucles à verrouillage de phase, et un second signal de différence de phase indiquant que le second signal d'horloge synchronisé mène au premier signal d'horloge synchronisé, et
dans lequel les filtres passe-bas (314a, 314b ; 514a à d ; 614a, 614b) incluent des premier et second filtres passe-bas pour filtrer les premier et second signaux de différence de phase, respectivement.

8. Dispositif de détection d'erreur de suivi de piste selon l'une quelconque des revendications 2 à 7, comportant en outre un amplificateur différentiel (316 ; 516a, 516b, 518 ; 616) pour générer un signal d'erreur de suivi de piste correspondant à un signal de différence des sorties des premier et second filtres passe-bas (314a, 314b ; 614a, 614b).

9. Dispositif de détection d'erreur de suivi de piste pour produire un signal d'erreur de suivi de piste en tant que signal de différence de signaux de détection optique généré par deux détecteurs optiques disposés à l'extérieur du centre de la piste d'une unité de détection optique à trois sections, le dispositif comportant :
des dispositifs de binarisation (308a, 308b ; 508a à d ; 608a, 608b ; 708a, 708b) pour binariser chacune des sorties des deux détecteurs optiques,
un détecteur de différence de phase (312 ; 512a, 512b ; 612 ; 712) pour détecter une différence de phase entre le sorties des dispositifs de binarisation (308a, 308b ; 508a à d ; 608a, 608b ; 708a, 708b), et
un filtre passe-bas (314a, 314b ; 514a à d ; 614a, 614b ; 714a, 714b) pour filtrer la sortie du détecteur de différence de phase afin de délivrer en sortie le résultat en tant que signal d'erreur de suivi de piste.

10. Dispositif de détection d'erreur de suivi de piste selon la revendication 9, comportant en outre des boucles à verrouillage de phase (310a, 310b ; 510a à d ; 610a, 610b) couplées aux dispositifs de binarisation (308a, 308b ; 508a à d ; 608a, 608b) et au détecteur de différence de phase (312 ; 512a, 512b ; 612), qui servent à générer des signaux d'horloge synchronisés avec chacune des sorties des dispositifs de binarisation (308a, 308b ; 508a à d ; 608a, 608b) pour délivrer en sortie les signaux synchronisés au détecteur de différence de phase (312 ; 512a, 512b ; 612)
dans lequel le détecteur de différence de phase (312 ; 512a, 512b ; 612) détecte une différence de phase entre les signaux synchronisés délivrés en sortie par les boucles à verrouillage de phase (310a, 310b ; 510a à d ; 610a, 610b).
